Europäisches Patentamt

(19) European Patent Office

Office européen des brevets

(11) Numéro de publication : **0 296 218 B1**

(12) **FASCICULE DE BREVET EUROPEEN**

(45) Date de publication du fascicule du brevet :
**11.09.91 Bulletin 91/37**

(51) Int. Cl.$^5$ : **F01C 1/08, F16H 55/08**

(21) Numéro de dépôt : **88900825.6**

(22) Date de dépôt : **05.01.88**

(86) Numéro de dépôt international :
**PCT/FR88/00005**

(87) Numéro de publication internationale :
**WO 88/05118 14.07.88 Gazette 88/15**

(54) **PROFILS DE ROTORS, DU TYPE A VIS, POUR MACHINES TOURNANTES VEHICULANT UN FLUIDE GAZEUX.**

(30) Priorité : **06.01.87 FR 8700192**

(43) Date de publication de la demande :
**28.12.88 Bulletin 88/52**

(45) Mention de la délivrance du brevet :
**11.09.91 Bulletin 91/37**

(84) Etats contractants désignés :
**AT BE CH DE FR GB IT LI LU NL SE**

(56) Documents cités :
**EP-A- 0 080 585**
**CH-A- 267 186**
**DE-A- 2 904 332**
**GB-A- 1 342 287**

(73) Titulaire : **BAUDOT-HARDOLL S.A.**
**23, avenue Aristide-Briand Paron**
**F-89100 Sens (FR)**
Titulaire : **HELLIOT, Bernard**
**20, rue Massena**
**F-69006 Lyon (FR)**

(72) Inventeur : **BAUDRIER, Patrick**
**10, rue de la Haye**
**F-89100 Sens (FR)**
Inventeur : **HELLIOT, Bernard, R.A.G.**
**20, rue Masséna**
**F-69006 Lyon (FR)**

(74) Mandataire : **Ropital-Bonvarlet, Claude et al**
**Cabinet BEAU DE LOMENIE, 51, avenue**
**Jean-Jaurès**
**F-69007 Lyon (FR)**

## Description

### DOMAINE TECHNIQUE :

La présente invention concerne les machines tournantes comprenant un stator dans lequel sont logés deux rotors, respectivement mâle et femelle, entraînés en rotations inverses, de façon commandée ou non. L'objet de l'invention concerne le domaine technique des machines du type ci-dessus dont les rotors possèdent des dents hélicoïdales complémentaires engendrant, par leur coopération, des alvéoles à volume variable, établissant, par leur développement selon une direction parallèle à l'axe de rotation des rotors, une circulation d'un fluide gazeux entre un orifice d'admission ou d'aspiration et un orifice de refoulement.

L'objet de l'invention concerne les machines du type ci-dessus fonctionnant en tant que compresseur ou pompe à vide.

### TECHNIQUE ANTERIEURE :

Dans les machines du type ci-dessus, la rotation des rotors dans leurs alésages, lorsqu'elle est produite par la rotation commandée d'un rotor entraînant celle de l'autre, s'effectue avec interposition d'un liquide, généralement de l'huile, assurant l'étanchéité entre les dents des rotors et les alésages du stator, la lubrification entre le rotor et le stator et le refroidissement du fluide gazeux comprimé.

Les rotors, du type à vis, connus par la demande GB-A-1342287, possèdent des sommets de dents en forme de coin.

Généralement, dans les machines connues, du type ci-dessus, dans une position de départ, le point d'engrènement, entre le sommet d'une dent du rotor mâle et le creux de dent correspondante du rotor femelle, est situé sur la droite joignant les centres de rotation des rotors mâle et femelle. Dans ce type de construction, la tangente commune au sommet de dent du rotor mâle et au creux de dent du rotor femelle, passant par ce point d'engrènement, est alors perpendiculaire à la droite joignant les centres des rotors mâle et femelle. Dans une telle construction, la présence du liquide d'étanchéité, de lubrification et de refroidissement, entraîne une perte de puissance importante, due au phénomène de coincement des molécules liquides entre le sommet des dents des rotors mâle et femelle et les alésages du stator les contenant. Ce phénomène de coincement engendre des pressions importantes imposant des efforts radiaux nuisibles aux rotors et aux paliers les supportant. Ces efforts radiaux sont amplifiés par la centrifugation du liquide se concentrant, d'une part, vers le sommet des dents par la rotation élevée des rotors et, d'autre part, par l'écoulement de ce liquide, du plan de refoulement en direction du plan d'aspiration, en raison de la différence de pression entre ces deux plans.

Il doit être considéré qu'un phénomène analogue se produit aussi dans le cas où les rotors sont entraînés en rotations commandées synchronisées par des engrenages. Dans un tel cas, aucun fluide de lubrification n'est prévu. On constate, cependant, pour chaque sommet de dents, la formation d'un coin d'air à haute pression responsable d'un échauffement et d'une perte de rendement.

L'objet de l'invention est de proposer des nouveaux profils de rotors mâle et femelle, visant à diminuer, à la fois, l'importance et l'étendue du phénomène de coincement des molécules, soit du liquide d'étanchéité, de lubrification et de refroidissement du fluide gazeux, soit encore de ce dernier.

### EXPOSE DE L'INVENTION :

Pour atteindre le but ci-dessus, l'invention propose des profils de taillage de rotors mâle et femelle, du type à vis, utilisables dans des machines tournantes destinées à véhiculer un fluide gazeux, lesdits rotors étant prévus pour être disposés dans des alésages cylindriques, d'axes parallèles et sécants, délimités par un corps de machine, lesdits rotors comportant des dents hélicoïdales complémentaires, engrenant entre elles successivement, lors de la rotation en sens inverse des rotors, à travers l'intersection des alésages de manière à délimiter, à partir d'un plan transversal d'aspiration, une alvéole à volume variable évoluant axialement en direction d'un second plan transversal de refoulement, lesdites dents étant réalisées pour que, dans une position de départ, deux dents mâle et femelle complémentaires possèdent entre elles un point d'engrènement entre le sommet de la dent mâle et le creux de la dent femelle et pour que, d'autre part, au moins chaque dent mâle possède, à partir de son sommet, un chanfrein d'angle ouvert dans le sens de rotation dudit rotor, et qui sont caractérisés en ce qu'ils font intervenir au moins pour chacune des dents du rotor mâle :

— un sommet dont la droite le joignant au centre de rotation du rotor est décalée dans la position de départ d'un angle dans le sens de rotation dudit rotor, par rapport à la droite joignant le centre de rotation du rotor mâle au centre de rotation du rotor femelle,

— un chanfrein d'angle ouvert dans le sens de rotation et défini entre, d'une part, une tangente au sommet, perpendiculaire à une droite joignant ledit sommet au centre de rotation du rotor mâle et, d'autre part, une droite tangente au sommet et perpendiculaire a une droite joignant ledit sommet au centre instantané de rotation.

Diverses autres caractéristiques ressortent de la description faite ci-dessous en référence aux dessins annexés qui montrent, à titre d'exemples non limitatifs, des formes de réalisation de l'objet de l'invention.

## BREVE DESCRIPTION DES DESSINS :

La **fig. 1** est une coupe transversale d'une machine tournante conforme à l'invention.

La **fig. 2** est une coupe-élévation axiale, prise sensiblement selon la ligne II-II de la **fig. 1**.

La **fig. 3** est une coupe transversale montrant, à plus grande échelle, la réalisation des profils selon l'invention.

Les **fig. 4 à 10** sont des vues schématiques, analogues à la **fig. 1**, illustrant différentes phases caractéristiques de fonctionnement de l'objet de l'invention.

Les **fig. 11 et 12** sont des coupes transversales montrant deux variantes de réalisation de l'un des moyens de l'invention.

## MEILLEURE MANIERE DE REALISER L'INVENTION :

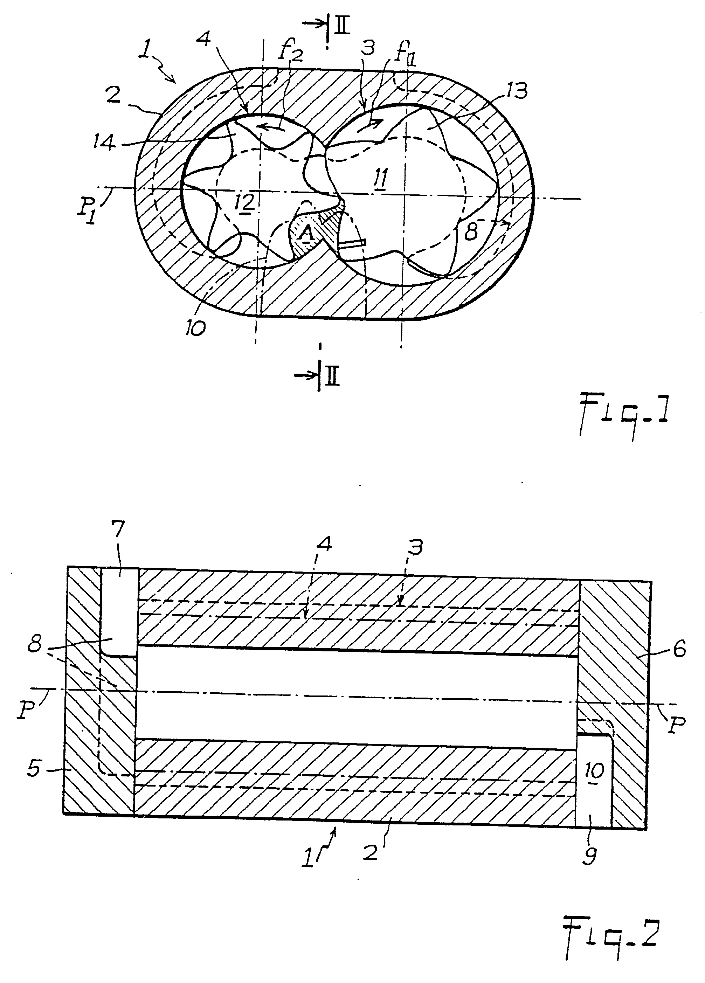

Les **fig. 1 et 2** montrent une machine tournante **1** comprenant un corps ou stator **2** délimitant deux alésages **3** et **4** qui sont d'axes parallèles et sécants. Le stator **2** est fermé latéralement par deux flasques **5** et **6** définissant, respectivement, un orifice d'aspiration **7** communiquant avec un vestibule **8** en relation avec la partie supérieure des alésages **3** et **4**, et un orifice de refoulement **9** communiquant avec une chambre de refoulement **10** en relation avec la partie basse des alésages **3** et **4**. Les chambres **7** et **9** ont leurs ouvertures situées de part et d'autre d'un plan **P** passant par les axes des rotors.

Les flasques **5** et **6** possèdent, bien que cela ne soit pas représenté, des paliers pour le support de deux rotors, respectivement mâle **11** et femelle **12**, logés dans les alésages **3** et **4**. L'un des rotors, par exemple te rotor **11**, est qualifié de menant, en raison de son entraînement en rotation dans le sens de la flèche $f_1$ par un organe moteur non représenté. Le rotor femelle **12** est qualifié de mené, en raison du fait que sa rotation, selon $f_2$, est provoquée par celle du rotor **11**.

D'une façon connue, les rotors **11** et **12** sont pourvus de dents hélicoïdales complémentaires **13** et **14** s'engrenant successivement, lors des rotations dans le sens des fléches $f_1$ et $f_2$, dans l'intersection des alésages **3** et **4**. D'une façon connue, les dents **13** et **14** sont définies en section droite transversale, perpendiculaire à l'axe de rotation, par des profils comprenant, pour chacune des dents, plusieurs segments de courbes se raccordant successivement en étant déterminés de manière que, lors de l'engrènement de deux dents complémentaires dans l'intersection des alésages **3** et **4**, les rotations, selon les flèches $f_1$ et $f_2$, fassent naître, dans le plan transversal d'aspiration, une alvéole **A** à volume progressivement décroissant et qui, en raison de la forme hélicoïdale des dents, évolue en déplacement axial du plan transversal d'aspiration en direction du plan transversal opposé correspondant au flasque de refoulement **6**.

Un tel principe de fonctionnement, dû à la géométrie des dents, n'est pas l'objet de l'invention et n'est pas décrit plus précisément dans ce qui suit, étant entendu que la connaissance de ce principe et celle des moyens pour sa mise en oeuvre sont accessibles pour tout homme de l'art, à partir de nombreuses publications disponibles.

Ainsi que cela est rappelé précédemment, la rotation des rotors **11** et **12** produit l'établissement d'un film de liquide d'étanchéité, de lubrification et de refroidissement, sur toute la surface interne des alésages **3** et **4**. Pour supprimer le phénomène de coincement des molécules de ce film ou, encore, de celles du fluide gazeux véhiculé, entre les alésages et les sommets des dents **13** et **14**, l'invention propose de conférer au moins aux dents **13** un profil en section droite transversale, comme décrit ci-après.

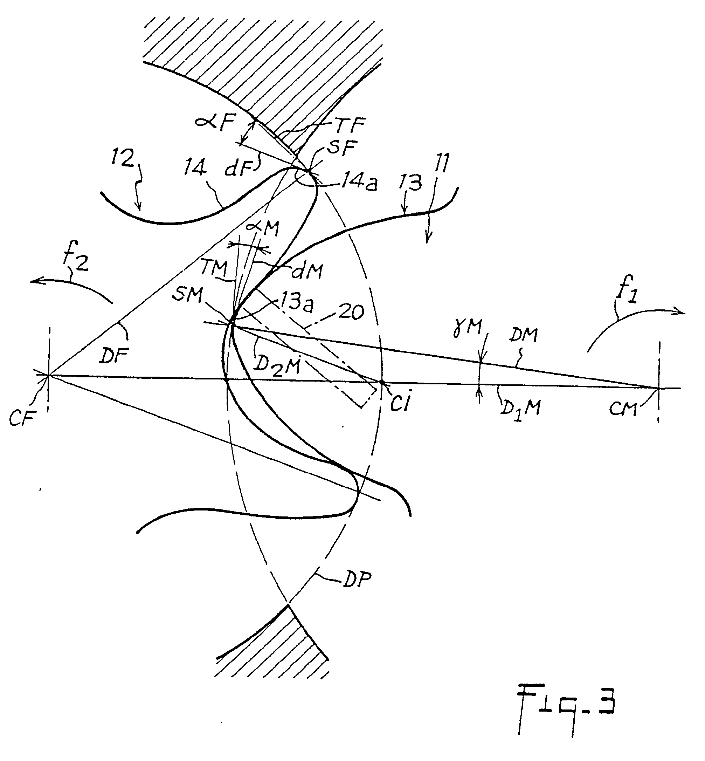

La **fig. 3** montre que chaque dent **13** du rotor **11** est réalisée pour comporter un sommet SM décalé dans le sens de rotation d'une valeur angulaire γM comprise entre, d'une part, une droite DM joignant le centre de rotation CM du rotor mâle **11** au sommet SM et, d'autre part, la droite $D_1M$ joignant le centre CM au centre CF du rotor femelle **12**. L'angle γM peut être compris entre 0 et 30° et présente, de préférence, une valeur égale à 7°.

Le sommet SM est raccordé au segment de profil aval selon le sens de rotation $f_1$ par un chanfrein **13a** matérialisé par une droite dM tangente au sommet SM et perpendiculaire à une droite $D_2M$ joignant le sommet SM au centre instantané de rotation CI. La droite dM fait un angle αM avec la tangente TH passant par le sommet SM et perpendiculaire à la droite DM. L'angle αM peut être compris entre 0 et 36° et sa valeur détermine, par construction, celle de l'angle γM, l'entraxe et les diamètres des alésages **3** et **4** étant donnés.

La **fig. 3** montre, également, que chaque dent **14** du rotor femelle peut aussi être conçue pour présenter, en section droite transversale, un profil tel qu'à partir du sommet SF se présente un chanfrein **14a**, incliné dans le sens de rotation $f_2$. Le chanfrein **14a** est réalisé de manière que la droite dF le matérialisant fasse un angle αF avec la tangente TF passant par le sommet SF et perpendiculaire à la droite DF joignant le sommet au centre de rotation CF du rotor femelle **12**. L'angle αF, ouvert dans le sens de rotation $f_2$, peut être compris entre 0 et 90° et possède, de préférence, une valeur comprise entre 10 et 30°.

L'examen de la **fig. 3** permet de constater que les chanfreins **13a** et **14a**, s'ouvrant selon les angles αM et αF, sont responsables de la définition par rapport aux surfaces périphériques des alésages **3** et **4**, de volumes en forme de coin. Ces chanfreins agissent, lors de la rotation dans les sens des flèches $f_1$ et $f_2$,

pour refouler le liquide d'étanchéité, de lubrification et de refroidissement ou, encore, le gaz véhiculé, sans le soumettre à un effet de laminage et de coincement, comme cela se produit lorsque les sommets **SM** et **SF** sont raccordés de façon tangentielle.

Une conformation des profils, comme dit ci-dessus, permet :

— une diminution des frottements au sommet des dents, étant donné que le liquide d'étanchéité, de lubrification et de refroidissement n'est plus emprisonné entre les sommets des dents des rotors et les alésages du stator,

— une réduction des fuites de refoulement du liquide ou du gaz comprimé vers l'aspiration, étant donné que ce liquide ou ce gaz est repoussé par les chanfreins, au lieu d'être absorbé ou avalé par la forme progressive des profils de raccordement tangentiel,

— une diminution des zones soumises au frottement, en raison de la réduction de la masse de liquide entrainée en retour vers l'aspiration,

— une amélioration du rendement mécanique et du rendement thermique par réduction simultanée des sources d'échauffement parasites dues aux frottements et aux fuites de liquide et de gaz (ou de gaz seul), ceci réduisant, d'ailleurs, la quantité de chaleur devant être évacuée par le fluide réfrigérant.

Dans le cas de réalisation des dents **13** selon la **fig. 3**, la forme qui leur est conférée modifie le dessin de la chambre de refoulement **10** coïncidant avec le lieu des points de contact des rotors mâle et femelle dans le plan transversal correspondant. Pour assurer une vidange totale de l'alvéole A à volume variable, il est avantageux, comme illustré par la **fig. 3**, de ménager sur la face transversale du rotor mâle **11**, correspondant au plan de la chambre de refoulement **10** et pour chacune des dents **13**, une communication **20** entre le segment de profil précédant le chanfrein **13a** dans le sens de rotation du rotor et une zone voisine du centre instantané de rotation **CI**. Une telle communication peut être formée par un chambrage ménagé dans la face transversale ou, encore, par un conduit pratiqué en retrait de cette face, à partir du profil de dent, pour déboucher dans cette dernière par un trou de communication.

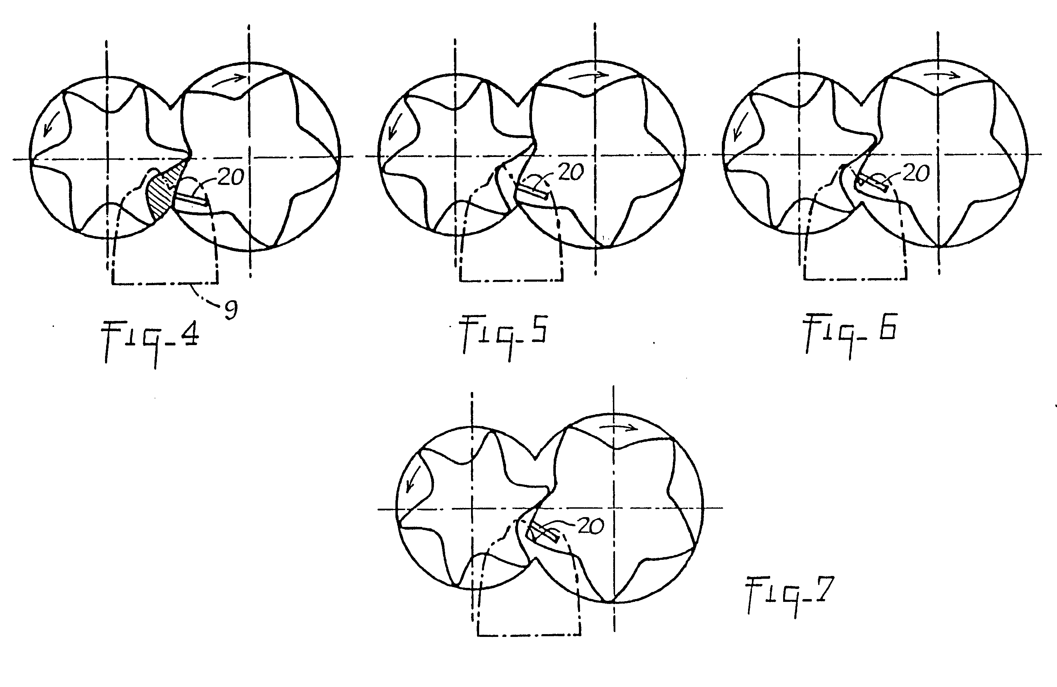

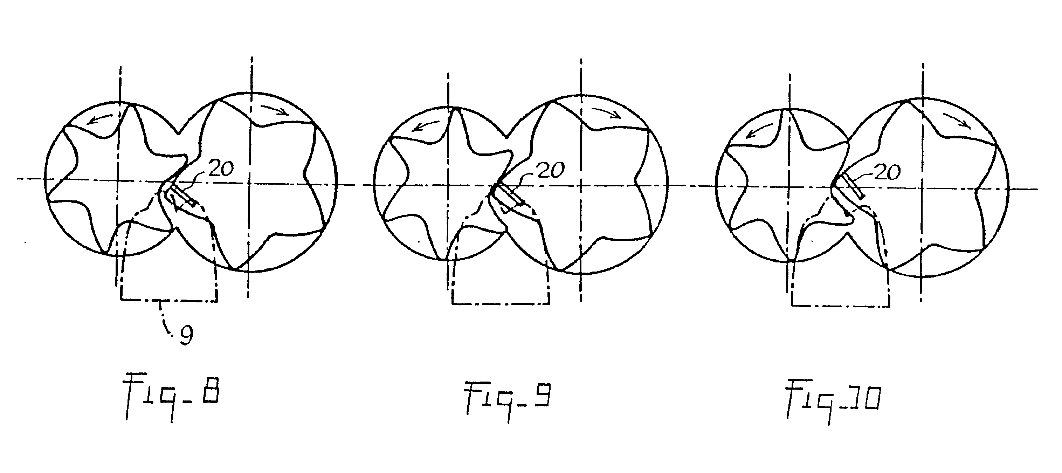

La communication **20** permet, comme cela ressort de l'examen des **fig. 4** à **10**, de maintenir en communication l'alvéole de refoulement A délimitée entre deux dents en coopération et la chambre de refoulement **10**, pendant toute la fin du refoulement.

L'objet de l'invention est décrit en relation avec des rotors possédant des dents de profil asymétrique. Il doit être considéré que les dispositions de l'invention peuvent être mises en oeuvre pour des profils symétriques.

Les différents avantages procurés par l'objet de l'invention se retrouvent intégralement dans le cas de construction où les rotors sont entraînés tous les deux en rotations commandées synchronisées par deux pignons extérieurs aux alésages des rotors mâle et femelle et, respectivement, rendus solidaires d'un rotor. Dans un tel cas, la présence du liquide d'étanchéité, de lubrification et de refroidissement n'est pas nécessaire et l'avantage procuré alors par la disposition selon l'invention est la diminution des fuites du fluide gazeux entre la phase de refoulement et le plan d'admission et la réduction de l'échauffement d'un tel fluide.

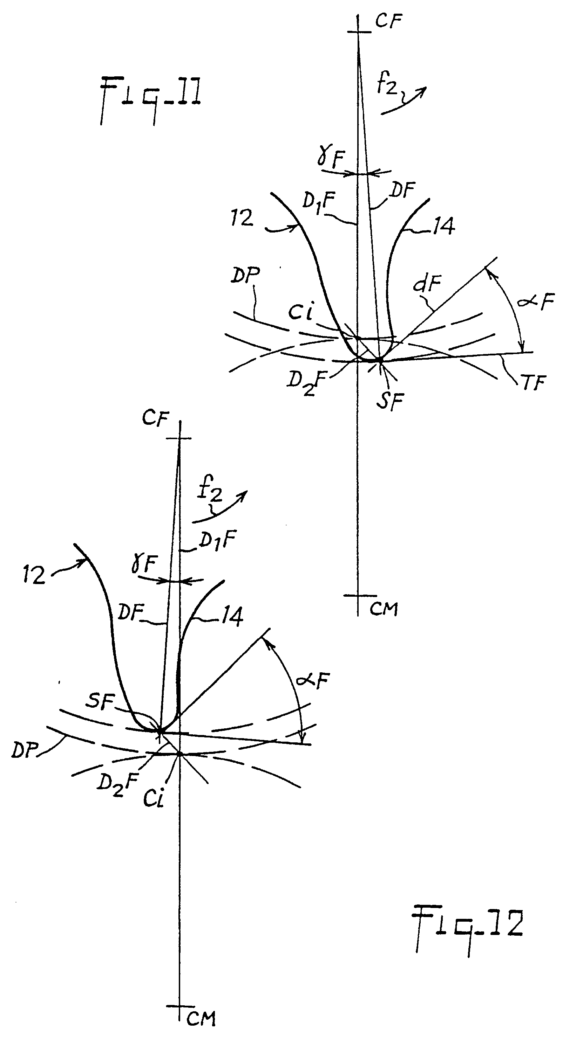

La **fig. 11** montre une variante de réalisation selon laquelle les sommets **SF** des dents **14** du rotor femelle **12** sont situés au-delà du diamètre primitif **DP** dudit rotor. Dans un tel cas, le sommet **SF** de chaque dent est décalé, dans le sens de rotation $f_2$, d'une valeur angulaire $\gamma F$ positive. Le sommet **SF** comporte, également, comme dit précédemment, un chanfrein **14a** qui est matérialisé par une droite d**F** passant par le sommet **SF** et perpendiculaire à une droite $D_2F$ joignant le sommet **SF** au centre instantané de rotation **CI**. La droite d**F** fait, avec la tangente **TF** au sommet **SF**, perpendiculaire à une droite **DF** joignant le sommet **SF** au centre **CF**, un angle $\alpha F$.

La **fig. 12** montre une autre variante correspondant à une réalisation selon laquelle chaque sommet **SF** est situé en-deçà du diamètre primitif **DP**. Dans un tel cas, l'angle $\gamma F$ est négatif par rapport au sens de rotation.

Dans les deux exemples selon les **fig. 11** et **12**, $\gamma M$ est fonction, à la fois, de la différence positive ou négative entre le rayon du sommet de dent et le rayon primitif de la dent **14** et de l'angle $\alpha F$ qui peut être compris entre 0 et 90° et possède, de préférence, une valeur comprise entre 10 et 30°. Si le rayon du sommet de dent est égal au rayon primitif, $\gamma F$ est nul, quel que soit $\alpha F$, comme cela est le cas de la **fig. 3**.

## POSSIBILITE D'APPLICATION INDUSTRIELLE :

L'objet de l'invention trouve une application particulièrement intéressante dans le domaine des compresseurs ou des pompes à vide.

## Revendications

1. Profils de rotors mâle et femelle complémentaires du type à vis, utilisables dans des machines tournantes destinées à véhiculer un fluide gazeux, lesdits rotors (**11 et 12**) étant prévus pour être disposés dans des alésages (**3 et 4**) cylindriques, d'axes parallèles et sécants, délimités par un corps de machine (**2**), lesdits rotors comportant des dents helicoïdales (**13 et 14**) complémentaires, engrenant entre elles successivement, lors de la rotation en sens inverse des rotors, à travers l'intersection des alésages de manière à délimiter, à partir d'un plan transversal d'aspiration, une alvéole (A) à volume variable évoluant axialement en direction d'un second plan transversal de refoulement, lesdites dents étant réalisées pour que, dans une position de départ, deux dents mâle et femelle complémentaires possèdent entre elles un point d'engrènement entre le sommet de la dent mâle et le creux de la dent femelle et pour que, d'autre part, au moins chaque dent mâle possède à partir de son sommet un chanfrein (13a) d'angle ouvert dans le sens de rotation dudit rotor,

caractérisés en ce qu'ils font intervenir au moins pour chacune des dents (13) du rotor mâle (11) :

— un sommet (SM) dont la droite (DM) le joignant au centre (CM) de rotation du rotor est décalée dans la position de départ d'un angle ($\gamma$M) dans le sens de rotation ($f_1$) dudit rotor par rapport à la droite ($D_1$M) joignant le centre (CM) au centre de rotation (CF) du rotor femelle (14),

— un chanfrein (13a) d'angle ($\alpha$M) ouvert dans le sens de rotation et défini entre, d'une part, une tangente (TM) au sommet (SM), perpendiculaire à une droite (DM) joignant ledit sommet au centre de rotation (CM) du rotor mâle (11) et, d'autre part, une droite (dM) tangente au sommet (SM) et perpendiculaire à une droite ($D_2$M) joignant ledit sommet au centre instantané de rotation (CI).

2. Profils selon la revendication 1, caractérisés en ce que l'angle ($\alpha$M) est compris entre 0 et 36°.

3. Profils selon la revendication 1, caractérisés en ce que l'angle ($\gamma$M) est défini par la droite (DM) joignant le centre de rotation (CM) du rotor (11) au sommet (SM) et par une droite ($D_1$M) joignant le centre (CM) au centre de rotation (CF) du rotor femelle (12).

4. Profils selon la revendication 1, caractérisés en ce qu'ils font intervenir, en outre, pour chacun des sommets (SF), des dents (14) du rotor femelle (12), un chanfrein (14a) d'angle ($\alpha$F) compris entre 0 et 90° ouvert dans le sens de rotation.

5. Profils selon la revendication 4, caractérisés en ce que les sommets (SF) se situent sur le diamètre primitif (DP) et en ce que chaque chanfrein (14a) est matérialisé par une droite (dF) faisant l'angle ($\alpha$F) avec une tangente (TF) passant par le sommet (SF) et perpendiculaire à une droite (DF) joignant le sommet (SF) au centre de rotation (CF) du rotor femelle.

6. Profils selon la revendication 4, caractérisés en ce que les sommets (SF) sont situés au-delà du diamètre primitif (DP) et sont décalés d'un angle ($\gamma$F) positif dans le sens de rotation ($f_2$).

7. Profils selon la revendication 4, caractérisés en ce que les sommets (SF) sont situés en-deçà du diamètre primitif (DP) et sont décalés d'un angle ($\gamma$F) négatif par rapport au sens de rotation ($f_2$).

8. Machine tournante destinée à véhiculer un fluide gazeux comportant un corps de machine (2) délimitant des alésages (3 et 4) dans lesquels sont disposés des rotors complémentaires mâle (11) et femelle (12) du type à vis comportant des dents (13)

et (14) respectivement ayant des profils selon l'une des revendications 1 à 7.

## Patentansprüche

1. Komplementäre männliche und weibliche Rotorprofile vom Spindeltyp, die in drehenden Maschinen verwendbar sind, bestimmt für den Transport eines gasförmigen Fluides, wobei die Rotoren (11 und 12) vorgesehen sind, um in zylindrischen Ausnehmungen (3 und 4) angeordnet zu werden, mit parallelen und sich schneidenden Achsen, begrenzt durch einen Maschinenkörper (2), wobei die Rotoren komplementäre schraubenförmige Zähne (13 und 14) aufweisen, die ineinander aufeinanderfolgend eingreifen, bei der Drehung in entgegengesetzter Richtung der Rotoren, durch den Schnittpunkt der Ausnehmungen hindurch derart, daß sie ausgehend von einer Querabsaugebene eine Zelle (A) mit variablem Volumen begrenzen, die sich axial in Richtung auf eine zweite Rückwurfquerebene entwickelt, wobei die Zähne so hergestellt sind, damit sie, in einer Ausgangsposition, zwei männliche und komplementäre weibliche Zähne aufweisen, untereinander einen Eingriffspunkt zwischen der männlichen Zahnspitze und der weiblichen Zahnhöhle aufweisen, und damit andererseits wenigstens jeder männliche Zahn ausgehend von seiner Spitze eine Fase (13a) eines in die Drehrichtung des Rotors offenen Winkels aufweist, **dadurch gekennzeichnet,** daß sie für wenigstens einen jeden der Zähne (13) des männlichen Rotors (11) berücksichtigen :

eine Spitze (SM), dessen Gerade (DM), die sie mit dem Drehzentrum (CM) des Rotors verbindet, in der Anfangsstellung um einen Winkel ($\gamma$M) in Rotationsrichtung ($f_1$) des Rotors bezüglich der Geraden ($D_1$M) versetzt ist, die das Zentrum (CM) mit dem Drehzentrum (CF) des weiblichen Rotors (14) verbindet,

eine Fase (13a) des Winkels ($\alpha$M), der in Drehrichtung offen ist und zwischen einerseits einer Tangente (TM) zu der Spitze (SM), senkrecht zu einer Geraden (DM) definiert ist, die die Spitze mit dem Drehzentraum (CM) des männlichen Rotors (11) verbindet und andererseits eine Gerade (dM) definiert ist, die die Spitze (SM) tangiert und senkrecht zu einer Geraden ($D_2$M), die die Spitze mit dem augenblicklichen Rotationszentrum (CI) verbindet.

2. Profile nach Anspruch 1, **dadurch gekennzeichnet,** daß der Winkel ($\alpha$M) zwischen 0 und 36° liegt.

3. Profile nach Anspruch 1, **dadurch gekennzeichnet,** daß der Winkel ($\gamma$M) durch die Gerade (DM) definiert wird, die das Drehzentrum (CM) des Rotors (11) mit der Spitze (SM) verbindet, und durch eine Gerade ($D_1$M) definiert wird, die das Zentrum (CM) mit dem Drehzentrum (CF) des weiblichen Rotors (12) verbindet.

4. Profile nach Anspruch 1, **dadurch gekennzeichnet**, daß sie weiterhin für eine jede Spitze (SF) Zähne (14) des weiblichen Rotors (12), eine Fase (14a) eines Winkels (αF) zwischen 0 und 90° in die Drehrichtung geöffnet, berücksichtigen.

5. Profile nach Anspruch 4, **dadurch gekennzeichnet**, daß sich die Spitzen (SF) auf Ausgangsdurchmesser (DP) befinden, und daß jede Fase (14a) durch eine Gerade (dF) markiert ist, die einen Winkel (αF) mit einer Tangente (TF) bildet, die durch die Spitze (SF) und senkrecht zu einer Geraden (DF) geht, die die Spitze (SF) mit dem Drehzentrum (CF) des weiblichen Rotors verbindet.

6. Profile nach Anspruch 4, **dadurch gekennzeichnet**, daß die Spitzen (SF) über den Ausgangsdurchmesser (DP) hinaus angeordnet sind und um einen positiven Winkel (F) in Drehrichtung ($f_2$) versetzt sind.

7. Profile nach Anspruch 4, **dadurch gekennzeichnet**, daß die Spitzen (SF) vom Ausgangsdurchmesser (DP) zurück angeordnet sind und um einen negativen Winkel (γF) bezüglich der Drehrichtung ($f_2$) versetzt sind.

8. Drehende Maschine, die dazu bestimmt ist, ein gasförmiges Fluid zu transportieren, mit einem Maschinenkörper (2), der Ausnehmungen (3 und 4) begrenzt, in denen komplementäre männliche (11) und weibliche (12) Rotoren vom Spindeltyp angeordnet sind, die Zähne (13) bzw. (14) aufweisen, die Profile nach einem der Ansprüche 1 bis 7 aufweisen.

## Claims

1. Profiles of screw-type rotors for rotary machines conveying a gaseous fluid, said rotors (11 and 12) being provided so as to be placed inside cylindrical bores (3 and 4), of parallel and secant axes defined by a machine body (2), said rotors comprising complementary helical teeth (13 and 14) successively intermeshing, through the rotation in reverse direction of the rotors, across the intersection of the bores, in such a way as to define, from a transversal induction plane, a cell (A) of variable volume which evolves axially toward a second transversal delivery plane, two complementary male and female teeth have between them a meshing point between the top of the male tooth and the bore of the female tooth (V) and so that, on the other hand, at least each male tooth has from its top, a chamfer (13a) having an angle open in the direction of rotation of said rotor :

characterized in that said profiles make use, at least for each one of the teeth (13) of the male rotor (11), of

— an apex (SM) of which the straight line (DM) joining it to the center (CM) of rotation of the rotor is offset in the starting position by an angle (γM) in the direction of rotation ($f_1$) of said rotor with respect to the straight line ($D_1M$) joining the center (CM) to the center of rotation (CF) of the female rotor (14),

— a chamfer (13a) of angle (αM) open in the direction of rotation and defined between, on the one hand, a tangent (TM) to the apex (SM), perpendicular to a straight line (DM) joining said apex to the center of rotation (CM) of the male rotor (11) and, on the other hand, a straight line (dM) tangent to the apex (SM) and perpendicular to a straight line ($D_2M$) joining said apex to the instantaneous center of rotation (CI).

2. Profile according to claim 1, characterized in that the angle (αM) is between 0 and 36°.

3. Profile according to claim 1, characterized in that the angle (γM) is defined by the straight line (DM) joining the center of rotation (CM) of the rotor (11) at the apex (SM) and by a straight line ($D_1M$) joining the center (CM) to the center of rotation (CF) of the female rotor (12).

4. Profile according to claim 1, characterized in that it also makes use, for each one of apices (SF) of the teeth (14) of the female rotor (12), of a chamfer (14a) of the angle (αF) ranging between 0 and 90° open in the direction of rotation.

5. Profile according to claim 4, characterized in that the apices (SF) are situated on the working diameter (DP) and in that each chamfer (14a) is materialized by a straight line (dF) forming the angle (αF) with a tangent (TF) passing through the apex (SF) and perpendicular to a straight line (DF) joining the apex (SF) to the center of rotation (CF) of the female rotor.

6. Profile according to claim 4, characterized in that the apices (SF) are situated beyond the working diameter (DP) and are offset of a positive angle (γF) in the direction of rotation ($f_2$).

7. Profile according to claim 4, characterized in that the apices (SF) are situated within the working diameter (DP) and are offset of a negative angle (γF) with respect to the direction of rotation ($f_2$).

8. Rotary machine for conveying a gaseous fluid, comprising a machine body (2) defining bores (3 and 4) in which screw-type male (11) and female (12) complementary rotors are placed, said rotors comprising teeth (13) and (14) respectively, having profiles according to one of claims 1 to 7.

Fig-1

Fig-2

Fig.3

Fig-4

Fig-5

Fig-6

Fig-7

EP 0 296 218 B1

Fig-8    Fig-9    Fig-10

EP 0 296 218 B1

Fig_11

Fig_12